(19) Europäisches Patentamt
European Patent Office
Office européen des brevets

(11) **EP 0 654 885 B1**

(12) **FASCICULE DE BREVET EUROPEEN**

(45) Date de publication et mention
de la délivrance du brevet:
**15.03.2000 Bulletin 2000/11**

(51) Int. Cl.[7]: **H02M 1/08**, H02M 1/088,
H02M 3/155, H02M 5/257,
H02M 5/293

(21) Numéro de dépôt: **94402632.7**

(22) Date de dépôt: **18.11.1994**

(54) **Dispositif d'alimentation de circuit de commande de composant interrupteur de puissance**

Stromversorgungsvorrichtung für die Steuerschaltung eines Leistungsschalters

Power supply device for the drive circuit of a power switching component

(84) Etats contractants désignés:
**AT BE CH DE DK ES FR GB GR IE IT LI LU NL PT SE**

(30) Priorité: **22.11.1993 FR 9313934**

(43) Date de publication de la demande:
**24.05.1995 Bulletin 1995/21**

(73) Titulaire:
**GEC ALSTHOM TRANSPORT SA
75116 Paris (FR)**

(72) Inventeur: **Piton, Michel
F-69006 Lyon (FR)**

(74) Mandataire: **Gosse, Michel et al
ALSTOM France SA
Service de Propriété Industrielle
c/o CEGELEC
5, Avenue Newton
92142 Clamart Cédex (FR)**

(56) Documents cités:
**EP-A- 0 044 663          FR-A- 2 191 343
US-A- 3 928 776          US-A- 4 504 778**

**Description**

La présente invention concerne d'une façon générale la commande de composants interrupteurs de puissance, utilisés notamment dans les convertisseurs d'énergie, et plus particulièrement l'alimentation des circuits de commande, appelés aussi allumeurs, de tels composants.

On connaît deux types de dispositifs d'alimentation de circuits de commande de composants interrupteurs de puissance, ceux qui utilisent une source d'énergie extérieure, et ceux qui utilisent la tension apparaissant aux bornes du composant interrupteur de puissance à l'état bloqué, dite aussi tension de blocage, pour charger, pendant les périodes de blocage de ce composant, un condensateur dit de réserve d'énergie.

Les premiers ont pour inconvénient, outre le fait de nécessiter une telle source d'énergie extérieure, de nécessiter un isolement galvanique, et donc de conduire à des solutions chères et souvent complexes, et ce d'autant plus que la tension d'isolement requise est élevée, et de ne pas toujours garantir un isolement dynamique (ou immunité aux $\frac{dv}{dt}$) satisfaisant.

Les seconds ont notammant pour inconvénient de ne pas être adaptés aux cas d'utilisation à temps de blocage relativement courts. La charge dudit condensateur de réserve d'énergie peut ainsi se faire:

- soit au moyen d'un système de type "pompe à diode" (ou "bootstrap"), mais un tel système a en outre pour inconvénient de ne pas fonctionner dans tous les cas d'application (par exemple dans le cas d'onduleurs dits à trois niveaux),
- soit au moyen d'une source de courant commandée ou non (transistor ballast...): voir le document "New driver concept for MOS-gated devices", N. KUMAGAI, Fuji Electric Corporate Japan, PCIM Europe, mars-avril 1993; cette dernière solution a en outre pour inconvénient de mettre en oeuvre des composants actifs utilisés à la limite de leur aire de sécurité dès que la tension de blocage du composant à commander s'élève.

Le document FR 2 191 343 décrit un dispositif statique pour l'alimentation en basse tension d'un circuit d'utilisation, dispositif comportant un condensateur de réserve d'énergie.

La présente invention a notamment pour but d'éviter les inconvénients précités.

La présente invention a pour objet un dispositif d'alimentation de circuit de commande de composant interrupteur de puissance, à partir de la tension apparaissant aux bornes de ce composant à l'état bloque, ce dispositif comportant un condensateur de réserve d'énergie et en outre des moyens pour charger ledit condensateur de réserve d'énergie pendant les périodes de conduction dudit composant, le dispositif d'alimentation étant caractérisé en ce que lesdits moyens pour charger ledit condensateur de réserve d'énergie pendant les périodes de conduction dudit composant comportent:

- un circuit oscillant connecté aux bornes dudit composant,
- un élément dit de branchement permettant de connecter ledit condensateur de réserve d'énergie aux bornes de l'inductance dudit circuit oscillant une fois que, à la mise en conduction dudit composant, l'énergie stockée dans le condensateur dudit circuit oscillant, pendant les périodes de blocage dudit composant, a été transférée dans ladite inductance.

D'autres objets et caractéristiques de la présente invention apparaîtront à la lecture de la description suivante d'un exemple de réalisation, faite en relation avec les dessins ci-annexés, dans lesquels:

- la figure 1 est un schéma destiné à illustrer un exemple de réalisation d'un dispositif suivant l'invention,
- la figure 2 est un diagramme destiné à illustrer le fonctionnement du dispositif illustré sur la figure 1.

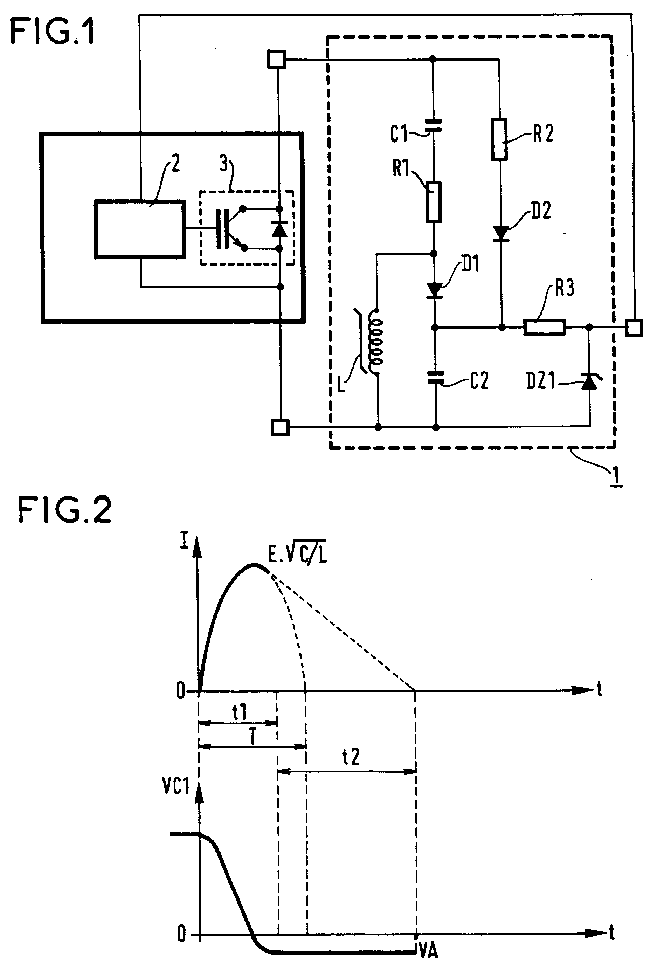

Le dispositif d'alimentation, noté 1, illustré sur la figure 1, est destiné à alimenter un circuit de commande, noté 2, d'un composant interrupteur de puissance, noté 3, constitué en l'occurrence par un composant dit à grille isolée, tel qu'un composant dit IGBT ("Insulated Gate Bipolar Transistor"), auquel cas ledit circuit de commande a deux états de consommation possibles, l'un de forte consommation, aux instants de commande de mise en conduction dudit composant, et l'autre de faible consommation, en dehors de ces instants.

Le dispositif d'alimentation 1 illustré sur la figure 1 alimente le circuit de commande 2 à partir de la tension apparaissant aux bornes du composant 3 à l'état bloqué. Dans l'exemple illustré sur la figure 1, ce dispositif comporte:

- un condensateur de réserve d'énergie, noté C2,
- des moyens de régulation de tension, fournissant la tension d'alimentation du circuit de commande 2 à partir de la tension aux bornes du condensateur de réserve d'énergie C2,
- des moyens pour charger le condensateur de réserve d'énergie C2 pendant les périodes de conduction dudit composant, et
- des moyens supplémentaires pour alimenter ledit circuit de commande au démarrage.

Lesdits moyens pour charger le condensateur de réserve d'énergie pendant les périodes de conduction dudit composant comportent dans l'exemple illustré sur la figure 1:

- un circuit oscillant connecté aux bornes du composant 3, et comportant une inductance L et un condensateur C1,
- un élément dit de branchement, constitué en l'occurrence par une diode D1, et permettant de connecter le condensateur de réserve d'énergie C2 aux bornes de l'inductance L du circuit oscillant une fois que, à la mise en conduction du composant 3, l'énergie stockée dans le condensateur C1 dudit circuit oscillant (pendant les périodes de blocage du composant 3) a été transférée vers l'inductance L du circuit oscillant.

Lesdits moyens supplémentaires pour alimenter le circuit de commande 2 au démarrage comportent, dans l'exemple illustré sur la figure 1, un circuit de charge du condensateur de réserve d'énergie C2 pendant les périodes de blocage du composant 3, ce circuit de charge étant lui-même constitué par un circuit connecté aux bornes du composant 3 et comportant, outre le condensateur C2, une résistance R2, et une diode D2.

Lesdits moyens de régulation de tension comportent, dans l'exemple illustré sur la figure 1, une diode Zener DZ1 et une résistance R3.

Le circuit de commande 2, qui a en l'occurrence deux états de consommation possibles, est alimenté à l'aide de deux circuits:

- un premier circuit constitué de la résistance R2 et de la diode D2 associées aux moyens de régulation de tension R3, DZ1; ce circuit est parcouru par un courant dit de faible consommation pendant les périodes de blocage du composant 3 et permet le maintien du système en stand-by (attente d'un ordre de mise en conduction);
- un second circuit constitué du condensateur C2 associé aux moyens de régulation R3-DZ1; ce circuit fournit:

  • le courant de forte consommation au moment de la mise en conduction du composant 3,
  • le courant de faible consommation durant les périodes de conduction du composant 3.

Le fait que ce dispositif d'alimentation comporte en outre des moyens pour charger le condensateur de réserve d'énergie C2 pendant les périodes de conduction du composant 3, autorise à choisir pour cette résistance R2 une résistance de forte valeur, et donc à minimiser les pertes dues à une désadaptation éventuelle entre la valeur du courant de faible consommation et la valeur du courant circulant dans cette résistance.

Le fait que ce dispositif d'alimentation comporte en outre de tels moyens pour charger le condensateur de réserve d'énergie C2 pendant les périodes de conduction du composant permet en outre une auto-adaptation du système qui transfère à chaque commutation l'énergie dont il a besoin, et autorise un fonctionnement dans lequel les périodes de blocage du composant sont relativement courtes (hormis bien entendu celle de ces périodes de blocage qui précède le démarrage, qui est plus longue, et qui permet de ce fait une charge du condensateur C2, par l'intermédiaire de son circuit de charge pendant les périodes de blocage, suffisante pour assurer la première mise en conduction du composant).

Le fonctionnement des moyens pour charger le condensateur de réserve d'énergie C2 pendant les périodes de conduction dudit composant est maintenant expliqué en relation avec les figures 1 et 2.

Lorsque le composant 3 se ferme, le condensateur C1 (qui se charge à travers ledit circuit oscillant pendant les périodes où le composant est bloqué) se décharge à travers l'inductance L selon un régime oscillant. Le courant I dans l'inductance L est alors une portion d'arche de sinusoïde de demi-période $T/2 = \pi . \sqrt{L.C1}$. La tension VC1 aux bornes du condensateur C1, notée VC1, aurait tendance à s'inverser. Mais à $t = t1$, VC1 atteint $- VC2$ (où VC2 désigne la tension aux bornes du condensateur C2, et VA désigne la tension d'alimentation obtenue aux bornes de la diode Zener DZ1, avec VC2 voisin de VA) et la diode D1 se met à conduire. L'inductance L se démagnétise alors par la maille L - D1 - C2. Cette démagnétisation s'effectue sous une tension constante en première approximation et le courant dans l'inductance L décroît linéairement jusqu'à s'annuler.

A $t = t1 + t2$, le courant dans l'inductance L est nul et toute l'énergie initialement stockée dans le condensateur C1 (soit $1/2.C1.E^2$, où E désigne la tension apparaissant aux bornes du composant à l'état bloqué) a été transférée dans le condensateur C2. La puissance correspondante fournie par ce dispositif d'alimentation est donc:

$$Pa = 1/2.C1.E^2.f$$

(où f désigne la fréquence de commutation du composant).

Chaque commutation du composant déclenche ainsi une recharge du condensateur de réserve d'énergie C2 et on apporte à chaque mise en conduction l'énergie nécessaire à la commande.

Dans de nombreux cas d'application, la tension de blocage E du composant varie à l'intérieur d'une plage assez vaste (cas de la traction électrique par exemple). La capacité du condensateur C1 doit donc être calculée pour apporter l'énergie nécessaire à la mise en conduction du composant dans le cas où la tension E est minimale (égale à Emin).

La puissance à fournir par le circuit de commande étant égale à:

$$Pg = VA^2 . Ce.f$$

où Ce désigne la capacité d'entrée du composant, la capacité du condensateur C1 doit donc vérifier la relation:

$$C1 = 2.Ce \ (VA/Emin)^2.$$

Par contre, pour une tension E supérieure à Emin, le surplus d'énergie qui croît comme le carré de la tension doit être dissipé dans le circuit d'alimentation ce qui est en particulier pénalisant pour le régulateur DZ1.

On peut cependant limiter les pertes dans le régulateur DZ1 en utilisant la saturation de l'inductance L et en prévoyant en outre dans ledit circuit oscillant une résistance R1 de valeur choisie égale ou proche de la résistance critique $R1 = 2.\sqrt{Lsat \ / \ C1}$ du circuit oscillant formé des éléments Lsat (valeur à l'état saturé de L) et C1, afin d'avoir un régime amorti de ce circuit lorsque l'inductance L est saturée.

Ainsi pour E=Emin, l'inductance L est dimensionnée de façon à ce que le transfert de l'énergie du condensateur C1 vers l'inductance L ait lieu avant la saturation de cette dernière; la résistance R1 est alors très loin de la valeur de la résistance critique du circuit et le régime est oscillant. Par contre pour E>Emin, la valeur de l'inductance L chute et le régime du circuit est amorti, le surplus d'énergie étant dissipé dans la résistance R1.

**Revendications**

1. Dispositif d'alimentation de circuit de commande (2) de composant interrupteur de puissance (3), à partir de la tension apparaissant aux bornes de ce composant à l'état bloqué, dispositif comportant un condensateur de réserve d'énergie (C2) et en outre des moyens (L, C1, D1) pour charger ledit condensateur de réserve d'énergie pendant les périodes de conduction dudit composant, ledit dispositif d'alimentation étant caractérisé en ce que lesdits moyens pour charger le condensateur de réserve d'énergie pendant les périodes de conduction dudit composant comportent:

   - un circuit oscillant (L, C1) connecté aux bornes dudit composant,
   - un élément dit de branchement (D1) permettant de connecter ledit condensateur de réserve d'énergie (C2) aux bornes de l'inductance (L) dudit circuit oscillant une fois que, à la mise en conduction dudit composant, l'énergie stockée dans le condensateur (C1) dudit circuit oscillant, pendant les périodes de blocage dudit composant, a été transférée dans ladite inductance (L).

2. Dispositif selon l'une des revendications 1 et 2, caractérisé en ce qu'il comporte en outre des moyens supplémentaires (R2, D2, C2) pour alimenter ledit circuit de commande au démarrage.

3. Dispositif selon la revendication 2, caractérisé en ce que lesdits moyens supplémentaires pour alimenter ledit circuit de commande au démarrage comportent des moyens pour charger ledit condensateur de réserve d'énergie (C2) pendant les périodes de blocage dudit composant.

4. Dispositif selon l'une des revendications 1 à 3, caractérisé en ce que, ledit circuit de commande présentant deux états de consommation possibles, l'un de forte consommation, aux instants de mise en conduction dudit composant, et l'autre de faible consommation, en dehors de ces instants, ce dispositif comporte en outre un premier circuit d'alimentation (R2, D2, R3, DZ1) connecté aux bornes dudit composant et fournissant un courant dit de faible consommation pendant les périodes de blocage dudit composant, et un second circuit d'alimentation (C2, R3, DZ1) connecté aux bornes dudit condensateur de réserve d'énergie et fournissant un courant dit de forte consommation aux instants de mise en conduction dudit composant ou de faible consommation pendant les périodes de conduction dudit composant.

5. Dispositif selon les revendications 3 et 4, caractérisé en ce que ledit premier circuit d'alimentation inclut lesdits moyens pour charger le condensateur de réserve d'énergie pendant les périodes de blocage dudit composant.

6. Dispositif selon l'une des revendications 1 à 5, caractérisé en ce qu'il comporte en outre des moyens (R3, DZ1) de régulation de tension, fournissant la tension d'alimentation dudit circuit de commande à partir de la tension aux bornes dudit condensateur de réserve d'énergie.

7. Dispositif selon l'une des revendications 1 à 6, caractérisé en ce que, la valeur de la tension apparaissant aux bornes du composant à l'état bloqué étant susceptible de varier dans une certaine plage, l'inductance (L) dudit circuit oscillant est dimensionnée de façon à ce que le transfert de l'énergie du condensateur (C1) de ce circuit oscillant vers cette inductance (L) ait lieu avant la saturation de cette dernière, pour la valeur minimale de cette tension, et après la saturation de cette dernière pour une valeur de cette tension supérieure à cette valeur minimale, et en ce que ledit circuit oscillant comporte en outre une résistance (R1) de valeur égale ou proche de la résistance critique de ce circuit oscillant pour la valeur à l'état saturé de ladite inductance (L).

## Claims

1. Power-supply apparatus for powering a control circuit (2) for controlling a power switch component (3), the apparatus powering said circuit from the voltage across the terminals of the component in the off state, said apparatus including an energy-storage capacitor (C2), and further including means (L, C1, D1) for charging said energy-storage capacitor during the periods in which said component is on, said power-supply apparatus being characterized in that said means for charging the energy-storage capacitor during the periods in which said component is on include:

   an oscillating circuit (L, C1) connected across the terminals of said component; a "connection" element (D1) enabling the energy-storage capacitor (C2) to be connected across the terminals of the inductance (L) of said oscillating circuit once the energy stored in the capacitor (C1) of said oscillating circuit, during the periods in which the component 3 is off, has been transferred to the inductance (L), on switching said component on.

2. Apparatus according to claim 1, characterized in that it further includes additional means (R2, D2, C2) for powering said control circuit on start-up.

3. Apparatus according to claim 2, characterized in that said additional means for powering said control circuit on start-up include means for charging said energy-storage capacitor (C2) during the periods in which said component is off.

4. Apparatus according to any one of claims 1 to 3, characterized in that, with said control circuit having two possible consumption states, namely a high-consumption state at the instants at which said component is switched on, and low-consumption state at all other times, the apparatus further includes a first power-supply circuit (R2, D2, R3, DZ1) connected across the terminals of said component and supplying a "low-consumption" current during the periods in which said component is off, and a second power-supply circuit (C2, R3, DZ1) connected across the terminals of said energy-storage capacitor and supplying a "high-consumption" current at the instants at which said component is switched on, or a "low-consumption" current during the periods in which said component is on.

5. Apparatus according to claims 3 and 4, characterized in that said first power-supply circuit includes said means for charging the energy-storage capacitor during the periods in which said component is off.

6. Apparatus according to any one of claims 1 to 5, characterized in that it further includes voltage-regulation means (R3, DZ1) supplying the power-supply voltage of said control circuit from the voltage across the terminals of said energy-storage capacitor.

7. Apparatus according to any one of claims 1 to 6, characterized in that, with it being possible for the value of the voltage across the terminals of the component in the off state to vary within a certain range, the inductance (L) of said oscillating circuit is dimensioned such that the energy is transferred from the capacitor (C1) of the oscillating circuit to the inductance (L) prior to saturation thereof, for the minimum value of the voltage, and after saturation of the inductance for any value of the voltage greater than the minimum value, and in that said oscillating circuit further includes a resistor (R1) having resistance that is equal to or in the vicinity of the critical resistance of the oscillating circuit for the value of said inductance (L) in the saturated state.

## Patentansprüche

1. Vorrichtung für die Stromversorgung der Steuerschaltung (2) einer Leistungs-schalterkomponente (3), ausgehend von der Spannung der Klemmen dieser Komponente im blockierten Zustand, wobei die Vorrichtung einen Reserveenergiekondensator (C2) umfasst und darüber hinaus Einrichtungen (L, C1, D1) zur Ladung des Reserveenergiekondensators während der leitenden Phasen der Komponente, wobei die Versorgungsvorrichtung dadurch gekennzeichnet ist, dass die Einrichtungen zur Ladung der Komponente während der leitenden Phasen der Komponente umfassen: einen Schwingkreis (L, C1) der mit den Klemmen der Komponente verbunden ist, ein Verzweigungselement (D1), das die Verbindung des Reserveenergie-kondensators (C2) mit den Klemmen der Induktivität (L) des Schwingkreises ermöglicht, sobald, wenn die Komponente leitend ist, die in dem Kondensator (C1) des Schwingkreises gespeicherte Energie, während der blockierten Phasen der Komponente, auf die Induktivität (L) übertragen wurde.

2. Vorrichtung nach Anspruch 1, dadurch gekennzeichnet, dass sie darüber hinaus Zusatzeinrichtungen ( R2, D2, C2) umfasst, zur versorgung der Steuerschaltung beim Hochfahren.

3. Vorrichtung nach Anspruch 2, dadurch gekennzeichnet, dass die Zusatzeinrichtungen zur Versorgung der Steuerschaltung beim Hochfahren Einrichtungen zum Laden des Reserveenergiekondensators (C2) während der blockierten Phasen der Komponente umfasst.

4. Vorrichtung nach einem der Ansprüche 1 bis 3, dadurch gekennzeichnet, dass der Steuerschaltkreis zwei mögliche Verbraucherzustände aufweist, einen mit starkem Verbrauch, in den Momenten, in denen die Komponente leitend wird, und einen mit schwachem Verbrauch, nach diesen Momenten; die Vorrichtung umfasst darüber hinaus einen ersten Versorgungsschaltkreis (R2, D2, R3, DZ1), der mit den Klemmen der Komponente verbunden ist und einen Strom geringen Verbrauches während der blockierten Phasen der Komponente abgibt, und einen zweiten Versorgungsschaltkreis (C2, R3, DZ1), der mit den Klemmen des Reserveenergiekondensators verbunden ist und einen Strom großen Verbrauches in den Momenten abgibt, in denen die Komponente leitend wird, oder geringen Verbrauches während der leitenden Phasen der Komponente.

5. Vorrichtung nach einem der Ansprüche 3 und 4, dadurch gekennzeichnet, dass der erste Versorgungsschaltkreis die Einrichtungen zum Laden des Reserveenergiekondensators während der blockierten Phasen der Komponente einschließt.

6. Vorrichtung nach einem der Ansprüche 1 bis 5, dadurch gekennzeichnet, dass sie darüber hinaus Einrichtungen (R3, DZ1) zur Spannungsregelung umfasst, die die Versorgungsspannung der Steuerschaltung zur Verfügung stellen, ausgehend von der Spannung der Klemmen des Reserveenergiekondensators.

7. Vorrichtung nach einem der Ansprüche 1 bis 6, dadurch gekennzeichnet, dass, da der Wert der Spannung, der an den Klemmen der Komponente im blockierten Zustand anliegt, über einen gewissen Bereich schwanken kann, die Induktivität (L) des Schwingkreises derart dimensioniert ist, dass der Energietransfer des Kondensators (C1) des Schwingkreises auf die Induktivität (L) vor der Sättigung der letzteren erfolgt, für den Minimalwert dieser Spannung, und nach der Sättigung des letzteren für einen höheren als den Minimalwert dieser Spannung, und dadurch, dass der Schwingkreis darüber hinaus einen Widerstand (R1) umfasst, mit einem Wert gleich oder ähnlich dem kritischen Widerstand des Schwingkreises für einen Wert im gesättigten Zustand der Induktivität (L).

# FIG.1

# FIG.2